# EUROPÄISCHE PATENTSCHRIFT

(11) **EP 3 320 536 B1**
(45) Veröffentlichungstag und Bekanntmachung des Hinweises auf die Patenterteilung: **06.11.2019**
(21) Anmeldenummer: 16722639.8
(22) Anmeldetag: 09.05.2016
(51) Int. Cl.: G10K 9/122

(54) **SCHALLWANDLER UND EINBAUANORDNUNG MIT EINEM SCHALLWANDLER**
SOUND TRANSDUCER AND INSTALLATION ASSEMBLY COMPRISING A SOUND TRANSDUCER
TRANSDUCTEUR ACOUSTIQUE ET AGENCEMENT DE MONTAGE AVEC UN TRANSDUCTEUR ACOUSTIQUE

(30) Priorität: 07.07.2015 DE 102015212683
(43) Veröffentlichungstag der Anmeldung: 16.05.2018
(73) Patentinhaber: Robert Bosch GmbH, 70442 Stuttgart (DE)
(72) Erfinder: SCHNEIDER, Michael, 76307 Karlsbad (DE); HOENES, Frank, 71254 Ditzingen (DE); KARL, Matthias, 76275 Ettlingen (DE)
(86) Internationale Anmeldenummer: PCT/EP2016/060345
(87) Internationale Veröffentlichungsnummer: WO 2017/005396

(56) Entgegenhaltungen:
- EP-A1- 1 083 099
- EP-A1- 1 855 093
- WO-A1-2007/036528
- WO-A1-2014/016288
- DE-A1-102009 006 030
- DE-A1-102010 044 997
- DE-A1-102010 045 971
- DE-A1-102012 209 238
- DE-A1-102012 211 011
- JP-A- 2004 260 239
- JP-A- 2014 204 387
- US-A1- 2002 036 954

## Beschreibung

### Stand der Technik

Die Erfindung betrifft einen Schallwandler nach dem Oberbegriff des Anspruchs 1. Ferner betrifft die Erfindung eine Einbauanordnung zwischen einem erfindungsgemäßen Schallwandler und einem Aufnahmeelement in Form einer als Durchgangsöffnung ausgebildeten Einbauöffnung eines Stoßfängers eines Kraftfahrzeugs.

Ein Schallwandler ist aus der DE 10 2009 022 187 A1 bekannt. Der bekannte Schallwandler weist ein insbesondere als Tiefziehteil ausgebildetes, aus Aluminium bestehendes, topfförmiges Gehäuse auf. In dem Gehäuse ist ein zur Erzeugung von Schallwellen ausgebildetes Piezoelement an einem ein Membranelement ausbildenden Gehäuseboden, üblicherweise mittels einer Klebeverbindung, befestigt. Darüber hinaus ist der Innenraum des Gehäuses mit einem schwingungsdämpfenden Material ausgefüllt. Dadurch soll insbesondere bewirkt werden, dass das Piezoelement bei einer Anregung des Gehäusebodens bzw. des Membranelements Schwingungen lediglich in die gewünschte Abstrahlrichtung aussendet. Bei der Herstellung eines derartigen Gehäuses im Tiefziehverfahren weist der schwingungsfähige Boden üblicherweise eine geringere Wandstärke auf wie der das Piezoelement umgebende Wandbereich des Gehäuses. Weiterhin ist die Wandstärke in dem üblicherweise zylindrisch ausgebildeten, das Piezoelement umgebenden Wandbereich konstant.

Weiterhin ist es beispielsweise aus der DE 10 2007 043 500 A1 bekannt, zur Entkopplung eines Schallwandlers in der Einbauposition in einer Einbauöffnung eines Stoßfängers zwischen dem Gehäuse des Schallwandlers und der Einbauöffnung einen aus relativ weichem Material bestehenden Entkopplungsring oder ähnliches einzusetzen. Ein derartiger, äußerer Entkopplungsring dient insbesondere dazu, eine seitliche Ausbreitung bzw.

Übertragung von Schallwellen in den Stoßfänger zu vermeiden. Gleichzeitig dient der Entkopplungsring auch dazu, einen Eintritt von Schmutzpartikeln oder Wasser in den (ringförmigen) Bereich zwischen der Einbauöffnung und dem Gehäuse des Schallwandlers zu Weiterer Stand der Technik ist in DE 102010 045 971, DE 10 2012 209 238, JP 2014 204387 und JP2004 260239 offenbart.

### Offenbarung der Erfindung

Ausgehend von dem dargestellten Stand der Technik liegt der Erfindung die Aufgabe zugrunde, einen Schallwandler derart weiterzubilden, dass bei Verzicht eines aus dem Stand der Technik bekannten Entkopplungsrings, der zwischen der Einbauöffnung in dem Anbauelement (Stoßfänge) und dem Gehäuse des Schallwandlers angeordnet ist, eine verbesserte Entkopplung erzielt werden kann. Insbesondere soll eine Übertragung von Schwingungen des Piezoelements in den Bereich des Aufnahmeelements vermieden werden.

Diese Aufgabe wird erfindungsgemäß bei einem Schallwandler mit den kennzeichnenden Merkmalen des Anspruchs 1 dadurch gelöst, dass das Gehäuse eine Wandstärke aufweist, die in Richtung einer Längsachse des Gehäuses, aus Richtung des Membranelements in Richtung des Innenraums betrachtet, ausgehend von einem Minimum in der Ebene des Piezoelements, in Richtung des Innenraums zunimmt.

Eine derartige Ausbildung des Gehäuses hat den Vorteil, dass in dem Bereich, in dem das Gehäuse in Kontakt bzw. Wirkverbindung mit der Einbauöffnung des Aufnahmeelements angeordnet ist, das Gehäuse eine relativ hohe Wanddicke aufweisen kann, wodurch die Problematik der Einkopplung von Schwingungen in das Aufnahmeelement zumindest reduziert, bestenfalls vollständig vermieden wird. Insbesondere ermöglicht es eine derartige Ausbildung des Schallwandlers auch, dass ein zwischen dem Außenumfang des Gehäuses und der Einbauöffnung ausgebildeter, insbesondere ringförmiger Spalt beim Auftreten von Feuchtigkeit nicht in Art einer Schallbrücke wirkt, wie dies beim Vorhandensein eines ansonsten üblichen Entkopplungsrings möglich ist. Vielmehr kann die Feuchtigkeit bzw. Wasser aus einem derartigen Spalt selbstständig abfließen, so dass eine Ansammlung von Feuchtigkeit bzw. Schmutz vermieden werden kann.

Vorteilhafte Weiterbildungen des erfindungsgemäßen Schallwandlers sind in den Unteransprüchen angegeben.

Um einerseits den Einbauraum innerhalb des Gehäuses durch die vergrößerte Wanddicke des Gehäuses nicht zu reduzieren, und andererseits einen besonders einfachen Einbau des Gehäuses in die Einbauöffnung des Aufnahmeelements zu ermöglichen, bei der einerseits eine Stirnfläche des Gehäuses als Axialanschlag für das Gehäuse dient, und andererseits das Gehäuse oberflächenbündig mit dem Aufnahmeelement bzw. dem Stoßfänger abschließt, ist es erfindungsgemäß vorgesehen, dass das Gehäuse in einer senkrecht zur Ebene des Piezoelements verlaufenden Richtung unterschiedliche Außendurchmesser aufweist, wobei der Außendurchmesser im Bereich des Membranelements am geringsten ist.

Zur Erzielung einer lediglich punkt- bzw. linienförmigen Anlage zwischen dem Gehäuse und der Einbauöffnung ist es vorgesehen, dass das Gehäuse eine Außenwand zur radialen im Bereich an der Einbauöffnung aufweist, wobei die Außenwand gegenüber einer Längsachse des Gehäuses schräg angeordnet ist. Eine derartige Ausbildung ermöglicht es insbesondere, das Aufnahmeelement im Bereich der Einbauöffnung relativ einfach bzw. ohne scharfkantige Übergänge ausbilden zu können, um die gewünschte punkt- bzw. linienförmige Anlage zwischen dem Gehäuse und der Einbauöffnung zu erzielen.

Eine weitere Verbesserung der Entkopplung bei der Übertragung von Schwingungen in das Anbauelement wird erzielt, wenn das Membranelement erfindungsgemäß in einem radial in Bezug zu einer Längsachse des Membranelements äußeren Bereich wenigstens eine radial umlaufende Nut aufweist, in deren Bereich die Wandstärke des Membranelements reduziert ist.

Um ein derartiges Gehäuse, das im Bereich des Membranelements bzw. im Bereich eines topfförmigen Bereichs unterschiedliche Wanddicken aufweist herstellungstechnisch besonders einfach mit geringen Kosten herstellen zu können, ist es darüber hinaus von Vorteil, wenn das Membranelement als ein vom übrigen Gehäuse separates Bauteil ausgebildet ist. Bei einer derartigen Ausbildung kann insbesondere auch das Membranelement, wie oben erläutert, beispielsweise auf besonders einfache Art und Weise mit radial umlaufenden Sicken oder ähnlichem ausgebildet sein. Darüber hinaus ist es dadurch möglich, das Membranelement und den restlichen Teil des Gehäuses beispielsweise aus unterschiedlichen Materialen herstellen zu können bzw. zusätzliche Entkopplungsmaßnahmen zwischen dem Membranelement und dem übrigen Gehäuse vorzusehen.

Die Erfindung umfasst auch eine Einbauanordnung zwischen einem soweit beschriebenen erfindungsgemäßen Schallwandler und einem Aufnahmeelement, in Form einer als Durchgangsöffnung ausgebildeten Einbauöffnung eines Stoßfängers eines Kraftfahrzeugs, wobei das Gehäuse des Schallwandlers mit einer Axialkraft gegen einen Vorsprung der Einbauöffnung kraftbeaufschlagt ist.

Um auf einen separaten Entkopplungsring verzichten zu können, ist es dabei bevorzugt vorgesehen, dass das Gehäuse des Schallwandlers unmittelbar an dem Aufnahmeelement anliegt. Zur Optimierung bzw. Minimierung der Schwingungsausbreitung in Richtung des Aufnahmeelements ist es vorgesehen, dass die Anlage zwischen dem Gehäuse und dem Aufnahmeelement (lediglich) punkt- oder linienförmig ausgebildet ist. Zur Ausbildung einer derartigen punkt- oder linienförmigen Anlage ist es insbesondere vorgesehen, dass das Aufnahmeelement im Bereich der Anlage mit einer punkt- oder linienförmigen Kontur ausgestattet ist, und dass das Gehäuse im Bereich der Anlage eben ausgebildet ist.

Eine besonders einfache Positionierung bzw. Zentrierung des Gehäuses zur Einbauöffnung lässt sich darüber hinaus erzielen, wenn die Einbauöffnung auf der dem Gehäuse zugewandten Seite mit einer Einsenkung versehen ist. Insbesondere lässt sich dadurch auch ein relativ schmal ausgebildeter Anlagebereich an dem Aufnahmeelement ausbilden, der radial an dem Gehäuse anliegt.

Zuletzt ist es möglich, zwischen dem Aufnahmeelement und dem Gehäuse ein Dämpfungselement anzuordnen, der an einer in Bezug zur Ebene des Piezoelements zurückgesetzten Stirnfläche des Gehäuses axial anliegt. Ein derartiges Dämpfungselement unterscheidet sich von einem aus dem Stand der Technik an sich bekannten Entkopplungsringen dadurch, dass das Dämpfungselement insbesondere nicht den ringförmig ausgebildeten Spalt zwischen dem Gehäuse und der Einbauöffnung in dem Anbauelement ausfüllt bzw. überbrückt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilbereich eines in einer Einbauöffnung eines Stoßfängers eingesetzten Schallwandlers in einem Längsschnitt,
- Fig. 2: den Schallwandler gemäß Fig. 1 bei einer abgewandelten Ausführungsform mit einer an der Innenwand des Gehäuses ausgebildeten, radial umlaufenden Aussparung, ebenfalls im Längsschnitt,
- Fig. 3: einen Teilbereich des Gehäuses im Bereich eines Membranelements im Längsschnitt,
- Fig. 4 bis Fig. 6: jeweils weitere abgewandelte Schallwandler in einer Einbauposition im Längsschnitt und
- Fig. 7: ein Detail einer Ankopplung zwischen dem Anbauelement und einem Gehäuse im Längsschnitt.

Gleiche Elemente bzw. Elemente mit gleicher Funktion sind in den Fig. mit den gleichen Bezugsziffern versehen.

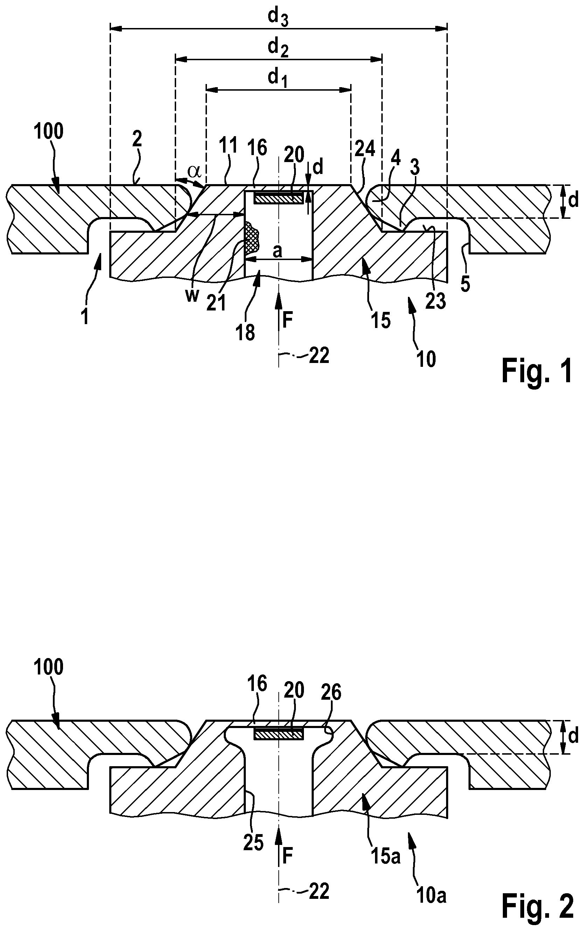

In der Fig. 1 ist der Teilbereich eines Schallwandlers 10 dargestellt, der als Bestandteil eines Fahrerassistenzsystems der Detektion und zur Entfernungsmessung von in Richtung vor bzw. hinter einem Fahrzeug angeordneten Objekten dient. Insbesondere sind dabei mehrere derartige Schallwandler 10 in jeweils einer Einbauöffnung 1 eines Stoßfängers 100 nebeneinander in definierten Abständen seitlich nebeneinander angeordnet. Vorzugsweise verläuft die eine Stirnseite 11 des Schallwandlers 10 oberflächenbündig mit der (äußeren) Oberfläche 2 des Stoßfängers 100.

Der Schallwandler 10 umfasst ein ein- oder mehrteilig ausgebildetes Gehäuse 15, das insbesondere aus Metall wie Aluminium besteht und vorzugsweise im Tiefziehverfahren hergestellt ist. Das Gehäuse 15 weist ein die Stirnseite 11 ausbildendes Membranelement 16 auf, dessen Dicke d zumindest im Wesentlichen gleichmäßig ausgebildet ist und das in Form einer schwingungsfähigen Membran wirkt. Innerhalb eines Innenraums 18 des Gehäuses 15 ist neben einer nicht dargestellten Elektronik ein scheiben- bzw. plattenförmig ausgebildetes Piezoelement 20 angeordnet. Insbesondere ist das Piezoelement 20 auf der dem Innenraum 18 abgewandten Seite mit dem Membranelement 16 verbunden, vorzugsweise mittels einer Klebeverbindung. Weiterhin ist das Piezoelement 20 auf nicht dargestellte Art und Weise mit der angesprochenen Elektronik im Gehäuse 15 elektrisch verbunden. Innerhalb des Innenraums 18 ist es auf der dem Membranelement 16 abgewandten Seite des Piezoelements 20 darüber hinaus optional vorgesehen, den Innenraum 18 mit einer schwingungsdämpfenden Masse 21 auszufüllen, welche der Einfachheit halber lediglich bereichsweise dargestellt ist.

Das Gehäuse 15 weist in Richtung seiner Längsachse 22 betrachtet unterschiedliche Durchmesserbereiche auf. Im Bereich des Membranelements 16 weist das Gehäuse 15 den geringsten Außendurchmesser d₁ auf. Der Außendurchmesser erweitert sich infolge einer kegelstumpfförmig ausgebildeten Außenkontur des Gehäuses 15 zu einem Außendurchmesser d₂. In diesem Bereich kommt es zu einem Durchmessersprung auf den Außendurchmesser d₃, so dass das Gehäuse 15 im Übergangsbereich zwischen den beiden Außendurchmessern d₂ und d₃ eine radial umlaufende Anlagefläche 23 ausbildet, an der das Gehäuse 15 an einem ersten, radial umlaufenden Vorsprung 3 der Einbauöffnung 1 axial anliegt. Die axiale Anlage des Gehäuses 15 an dem ersten Vorsprung 3 wird dabei insbesondere durch ein nicht dargestelltes Halteelement oder ähnliches für das Gehäuse 15 bzw. den Schallwandler 10 erzielt, der den Schallwandler 10 mit einer Axialkraft F in Richtung des ersten Vorsprungs 3 kraftbeaufschlagt.

Insbesondere ist es vorgesehen, dass das Gehäuse 15 im Bereich des Innenraums 18 einen zumindest nahezu konstanten Innendurchmesser a aufweist. Dadurch nimmt die Wandstärke w, betrachtet in Richtung der Längsachse 22, von der Ebene des Piezoelements 20 zu, so dass die Wandstärke w im Bereich des Außendurchmessers d₃ seinen größten Wert aufweist.

Im dargestellten Ausführungsbeispiel hat das Gehäuse 15 im Bereich zwischen den beiden Außendurchmessern d₁ und d₃ durch die kegelstumpfförmige Form des Gehäuses 15 eine in einem Winkel α schräg angeordnete Außenwand 24 auf. Weiterhin weist die Einbauöffnung 1 einen radial umlaufenden zweiten Vorsprung 4 auf, der dazu ausgebildet ist, eine punkt- bzw. linienförmige Anlage an der Außenwand 24 des Gehäuses 15 auszubilden.

Die Einbauöffnung 1 ist auf der dem Gehäuse 15 zugewandten Seite mit einer stufenförmige Einsenkung 5 versehen. Zwischen der Einsenkung 5 und dem Gehäuse 15 ist, mit Ausnahme im Bereich des ersten Vorsprungs 3, kein Anlagekontakt ausgebildet.

Der in der Fig. 2 dargestellte Schallwandler 10a unterscheidet sich von dem Schallwandler 10 der Fig. 1 dadurch, dass das Gehäuse 15a in der Ebene des Piezoelements 20 an seiner Innenwand 25 mit einer radial umlaufenden Aussparung 26 ausgebildet ist. Im Bereich der Aussparung 26 ist somit die Wandstärke w des Gehäuses 15a gegenüber dem Gehäuse 15 reduziert und weist im Bereich der Aussparung 26 sein Minimum auf.

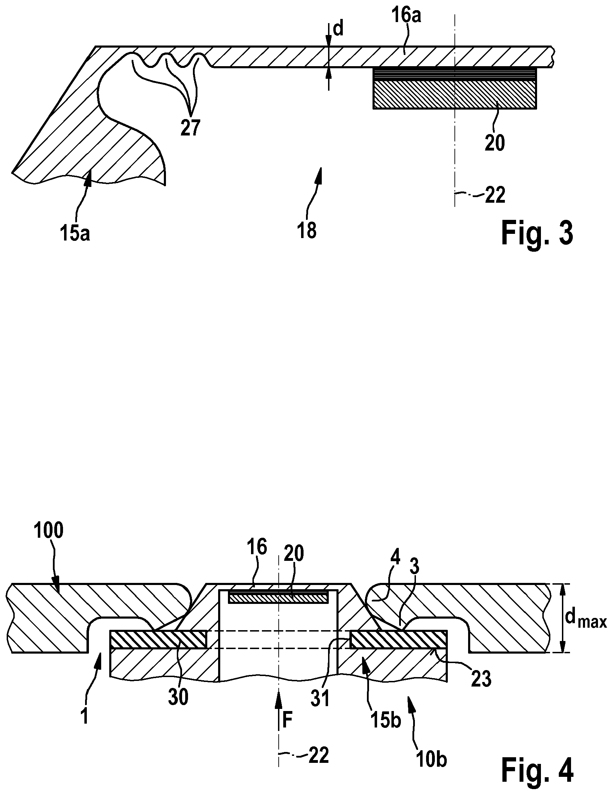

In der Fig. 3 ist im Detail ein Ausschnitt eines Membranelements 16a gezeigt, das anstelle des Membranelements 16 bei den Schallwandlern 10, 10a verwendet werden kann. Das Membranelement 16a weist in einem radial äußeren Bereich auf der dem Innenraum 18 zugewandten Seite beispielhaft drei konzentrisch zur Längsachse 22 des Gehäuses 15, 15a angeordnete, nutartige Vertiefungen 27 auf, in deren Bereich die Dicke d des Membranelements 16, 16a reduziert ist.

In der Fig. 4 ist ein Schallwandler 10b dargestellt, der sich von dem Schallwandler 10 gemäß der Fig. 1 dadurch unterscheidet, das zwischen der Anlagefläche 23 und dem ersten Vorsprung 3 der Einbauöffnung 1 ein ringförmig ausgebildetes Dämpfungselement 30 angeordnet ist, das in einer ringförmig ausgebildeten, radial umlaufenden Nut 31 im Gehäuse 15b gehalten ist.

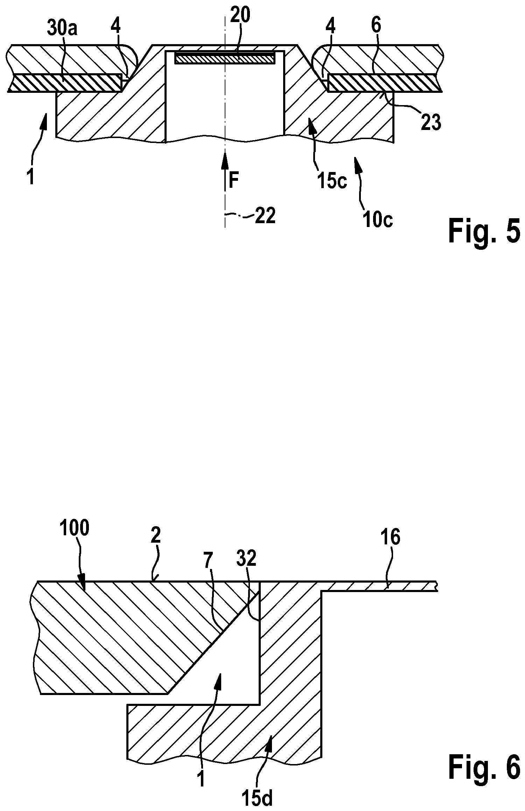

Bei dem Schallwandler 10c gemäß der Fig. 5 ist das Dämpfungselement 30a zwischen der Anlagefläche 23 des Gehäuses 15c und einer ebenen Innenseite 6 der Einbauöffnung 1 angeordnet. Wesentlich dabei ist, dass die Einbauöffnung 1 lediglich den zweiten Vorsprung 4 aufweist, der an der schräg angeordneten Außenwand 24 des Gehäuses 15c anliegt.

Zuletzt ist in der Fig. 6 ausschnittsweise ein Gehäuse 15d dargestellt, das im dargestellten Bereich zylindrisch ausgebildet ist. Die Einbauöffnung 1 weist eine schräg angeordnete Innenkante 7 auf, die in Höhe der Oberfläche 2 der Einbauöffnung 1 punkt- bzw. linienförmig an einer Außenwand 32 des Gehäuses 15d anliegt.

Die soweit beschriebenen Schallwandler 10, 10a bis 10d können in vielfältiger Art und Weise abgewandelt bzw. modifiziert werden.

## Patentansprüche

1. Schallwandler (10; 10a bis 10d), mit einem Gehäuse (15; 15a bis 15d) zur Aufnahme eines schwingungsfähiges Piezoelements (20) in einem Innenraum (18) des Gehäuses (15; 15a bis 1 15d) und einem Piezoelement (20), das in Wirkverbindung mit einem Membranelement (16; 16a) angeordnet ist durch Anlage des Piezoelements (20) an einer dem Innenraum (18) des Gehäuses (15; 15a bis 15d) zugewandten Seite des Membranelements (16; 16a), wobei das Membranelement (16; 16a) eine Stirnseite (11) des Gehäuses (15; 15a bis 15d) ausbildet, und wobei der Innenraum (18) des Gehäuses eine seitliche Innenwand (25) aufweist und wobei das Gehäuse (15; 15a bis 15d) eine Wandstärke (w) aufweist, die in Richtung einer Längsachse (22) des Gehäuses (15; 15a bis 15d), aus Richtung des Membranelements (16; 16a) in Richtung des Innenraums (18) betrachtet, ausgehend von einem Minimum in der Ebene des Piezoelements (20), in Richtung des Innenraums (18) zunimmt,
wobei das Gehäuse (15; 15a bis 15c) eine gegenüber der Längsachse (22) in einem Winkel (α) schräg angeordnete Außenwand (24) aufweist, sodass sich ein in einer senkrecht zur Ebene des Piezoelements verlaufender Außendurchmesser (d1, d2, d3) des Gehäuses ausgehend von einem Minimum (d1) in der Ebene des Piezoelements kegelstumpfförmig zu einem Außendurchmesser (d2) erweitert, **dadurch gekennzeichnet, dass** das Gehäuse (15) in der Ebene des Piezoelements (20) an seiner Innenwand (25) eine radial umlaufende, nutartige Aussparung (26) aufweist, in deren Bereich die Wandstärke (w) des Membranelements (16; 16a) reduziert ist.

2. Schallwandler nach Anspruch 1,
**dadurch gekennzeichnet,**
**dass** das Membranelement (16a) in einem radial außerhalb des Piezoelements (20) angeordneten Bereich wenigstens eine radial umlaufende Vertiefung (27) aufweist, in deren Bereich die Dicke (d) des Membranelements (16a) reduziert ist.

3. Schallwandler nach einem der Ansprüche 1 bis 2,
**dadurch gekennzeichnet,**
**dass** das Membranelement (16; 16a) als ein vom übrigen Gehäuse (15; 15a bis 15d) separates Bauteil ausgebildet ist.

4. Einbauanordnung zwischen einem Schallwandler (10; 10a bis 10d), der nach einem der Ansprüche 1 bis 3 ausgebildet ist, und einem Aufnahmeelement (100) in Form einer als Durchgangsöffnung ausgebildeten Einbauöffnung (1) eines Stoßfängers eines Kraftfahrzeugs, wobei das Gehäuse (15; 15a bis 15d) des Schallwandlers (10; 10a bis 10d) mit einer Axialkraft (F) gegen einen Vorsprung (3, 4) der Einbauöffnung (1) kraftbeaufschlagt ist.

5. Einbauanordnung nach Anspruch 4,
**dadurch gekennzeichnet,**
**dass** das Gehäuse (15; 15a; 15d) des Schallwandlers (10; 10a; 10d) unmittelbar an dem Aufnahmeelement (100) (1) anliegt.

6. Einbauanordnung nach Anspruch 4 oder 5
**dadurch gekennzeichnet,**
**dass** die Anlage zwischen dem Gehäuse (15; 15a bis 15d) und dem Aufnahmeelement (100) punkt- oder linienförmig ausgebildet ist.

7. Einbauanordnung nach Anspruch 6,
**dadurch gekennzeichnet,**
**dass** das Aufnahmeelement (100) im Bereich der Anlage mit einer punkt- oder linienförmigen Kontur, vorzugsweise in Form des Vorsprungs (3, 4) ausgestattet ist, und dass das Gehäuse (15; 15a bis 15d) des Schallwandlers (10; 10a bis 10d) im Bereich der Anlage an dem Aufnahmeelement (100) eben ausgebildet ist.

8. Einbauanordnung nach einem der Ansprüche 4 bis 7,
**dadurch gekennzeichnet,**
**dass** die Einbauöffnung (1) auf der dem Gehäuse (15; 15a bis 15d) zugewandten Seite mit einer Einsenkung (5) versehen ist.

9. Einbauanordnung nach einem der Ansprüche 4 bis 8,
**dadurch gekennzeichnet,**
**dass** zwischen dem Aufnahmeelement (100) und dem Gehäuse (15; 15a bis 15d) ein Dämpfungselement (30; 30a) angeordnet ist, das an einer in Bezug zur Ebene des Piezoelements (20) zurückgesetzten Fläche (23) des Gehäuses (15; 15a bis 15d) axial anliegt.

## Claims

1. Sound transducer (10; 10a to 10d) comprising a housing (15; 15a to 15d) for accommodating a vibratory piezo element (20) in an interior space (18) of the housing (15; 15a to 1 15d) and a piezo element (20) which is arranged in operative connection with a diaphragm element (16; 16a) by way of the piezo element (20) being in contact with a side of the diaphragm element (16; 16a) that faces the interior space (18) of the housing (15; 15a to 15d), wherein the diaphragm element (16; 16a) forms an end side (11) of the housing (15; 15a to 15d), and wherein the interior space (18) of the housing has a lateral inner wall (25) and wherein the housing (15; 15a to 15d) has a wall thickness (w) which, as viewed in the direction of a longitudinal axis (22) of the housing (15; 15a to 15d) from the direction of the diaphragm element (16; 16a) in the direction of the interior space (18), increases in the direction of the interior space (18) starting from a minimum in the plane of the piezo element (20), wherein the housing (15; 15a to 15c) has an outer wall (24) which is arranged obliquely at an angle (α) in relation to the longitudinal axis (22), so that an outside diameter (d1, d2, d3) of the housing, which outside diameter runs in a perpendicular in relation to the plane of the piezo element, widens in the manner of a truncated cone to an outside diameter (d2) starting from a minimum (d1) in the plane of the piezo element, **characterized in that** the housing (15) has, in the plane of the piezo element (20), on its inner wall (25), a radially encircling, groove-like cutout (26) in the region of which the wall thickness (w) of the diaphragm element (16; 16a) is reduced.

2. Sound transducer according to Claim 1, **characterized in that** the diaphragm element (16a) has, in a region which is arranged radially outside the piezo element (20), at least one radially encircling recess (27) in the region of which the thickness (d) of the diaphragm element (16a) is reduced.

3. Sound transducer according to either of Claims 1 and 2, **characterized in that** the diaphragm element (16; 16a) is designed as a component which is separate from the rest of the housing (15; 15a to 15d).

4. Installation arrangement between a sound transducer (10; 10a to 10d) which is designed according to one of Claims 1 to 3 and a receiving element (100) in the form of an installation opening (1), which is designed as a passage opening, of a bumper of a motor vehicle, wherein the housing (15; 15a to 15d) of the sound transducer (10; 10a to 10d) is subjected to the action of an axial force (F) against a projection (3, 4) of the installation opening (1).

5. Installation arrangement according to Claim 4, **characterized in that** the housing (15; 15a; 15d) of the sound transducer (10; 10a; 10d) bears directly against the receiving element (100) (1).

6. Installation arrangement according to Claim 4 or 5, **characterized in that** contact between the housing (15; 15a to 15d) and the receiving element (100) is in the form of a point or line.

7. Installation arrangement according to Claim 6, **characterized in that** the receiving element (100) is equipped, in the region of contact, with a point- or line-like contour, preferably in the form of a projection (3, 4), and **in that** the housing (15; 15a to 15d) of the sound transducer (10; 10a to 10d) is of planar design in the region of contact against the receiving element (100).

8. Installation arrangement according to one of Claims 4 to 7, **characterized in that** the installation opening (1) is provided with an indentation (5) on that side which faces the housing (15; 15a to 15d).

9. Installation arrangement according to one of Claims 4 to 8, **characterized in that** a damping element (30; 30a) is arranged between the receiving element (100) and the housing (15; 15a to 15d), which damping element bears axially against a surface (23) of the housing (15; 15a to 15d) that is recessed with respect to the plane of the piezo element (20).

## Revendications

1. Transducteur (10 ; 10a à 10d) doté d'un boîtier (15 ; 15a à 15d) pour l'accueil d'un piézo-élément oscillant (20) dans un espace intérieur (18) du boîtier (15 ; 15a à 1 15d) et d'un piézo-élément (20), lequel est relié de manière opérante à un élément de membrane (16 ; 16a) par installation du piézo-élément (20) sur un côté de l'élément de membrane (16 ; 16a) faisant face à l'espace intérieur (18) du boîtier (15 ; 15a à 15d), dans lequel l'élément de membrane (16 ; 16a) forme un côté frontal (11) du boîtier (15 ; 15a à 15d), et dans lequel l'espace intérieur (18) du boîtier comporte une paroi interne latérale (25) et dans lequel le boîtier (15 ; 15a à 15d) possède une épaisseur de paroi (w) dans la direction d'un axe longitudinal (22) du boîtier (15 ; 15a à 15d) qui, en partant d'un minimum dans le plan du piézo-élément (20), augmente dans la direction de l'espace intérieur (18) considérée depuis la direction de l'élément de membrane (16 ; 16a) vers la direction de l'espace intérieur (18), dans lequel le boîtier (15 ; 15a à 15c) possède une paroi extérieure (24) agencée en biais avec un angle (α) par rapport à l'axe longitudinal (22), de sorte qu'un diamètre extérieur (d1, d2, d3) du boîtier, s'étendant dans un perpendiculaire au plan du piézo-élément, s'élargit en forme conique à partir d'un minimum (d1) dans le plan du piézo-élément à un diamètre extérieur (d2), **caractérisé en ce que** le boîtier (15) comporte sur sa paroi intérieure (25) un évidement (26) en rainure sur le pourtour radial dans le plan du piézo-élément (20), dans la zone de laquelle l'épaisseur de paroi (w) de l'élément de membrane (16 ; 16a) est réduite.

2. Transducteur selon la revendication 1, **caractérisé en ce que** l'élément de membrane (16a) comporte, dans une zone agencée radialement à l'extérieur du piézo-élément (20), au moins une dépression (27) sur le pourtour radial, dans la zone de laquelle l'épaisseur (d) de l'élément de membrane (16a) est réduite.

3. Transducteur selon l'une des revendications 1 à 2, **caractérisé en ce que** l'élément de membrane (16 ; 16a) est réalisé comme une pièce séparée du reste du boîtier (15 ; 15a à 15d).

4. Configuration de montage entre un transducteur (10 ; 10a à 10d), lequel est réalisé selon l'une des revendications 1 à 3, et un élément d'accueil (100) sous forme d'une ouverture de montage (1), réalisée comme ouverture de passage, d'un pare-chocs d'un véhicule à moteur, dans lequel le boîtier (15 ; 15a à 15d) du transducteur (10 ; 10a à 10d) est soumis à une force axiale (F) contre une saillie (3, 4) de l'ouverture de montage (1).

5. Configuration de montage selon la revendication 4, **caractérisée en ce que** le boîtier (15 ; 15a ; 15d) du transducteur (10 ; 10a ; 10d) est directement contigu à l'élément d'accueil (100) (1).

6. Configuration de montage selon la revendication 4 ou 5, **caractérisée en ce que** l'installation entre le boîtier (15 ; 15a à 15d) et l'élément d'accueil (100) est réalisée de manière ponctuelle ou linéaire.

7. Configuration de montage selon la revendication 6, **caractérisée en ce que** l'élément d'accueil (100) est doté dans la zone de l'installation d'un contour ponctuel ou linéaire, de préférence sous forme d'une saillie (3, 4), et **en ce que** le boîtier (15 ; 15a à 15d) du transducteur (10 ; 10a à 10d) est réalisé de manière plane dans la zone de l'installation sur l'élément d'accueil (100).

8. Configuration de montage selon l'une des revendications 4 à 7, **caractérisée en ce que** l'ouverture de montage (1) est prévue avec un enfoncement (5) sur le côté faisant face au boîtier (15 ; 15a à 15d).

9. Configuration de montage selon l'une des revendications 4 à 8, **caractérisée en ce qu'**un élément amortisseur (30 ; 30a) est agencé entre l'élément d'accueil (100) et le boîtier (15 ; 15a à 15d), axialement contigu à une surface (23) du boîtier (15 ; 15a à 15d) reculée par rapport au plan du piézo-élément (20) .
